# EUROPÄISCHE PATENTSCHRIFT

(11) **EP 2 764 981 B1**
(45) Veröffentlichungstag und Bekanntmachung des Hinweises auf die Patenterteilung: **16.08.2017**
(21) Anmeldenummer: 14153342.2
(22) Anmeldetag: 30.01.2014
(51) Int. Cl.: B21D 51/26, B29C 65/16, B65D 25/04

(54) **Vorrichtung zum Lasertransmissionsschweißen, Verfahren zum Lasertransmissionsschweißen und ein damit hergestellter mit Folie verschlossener Behälter**
Device for laser transmission welding, method for laser transmission welding and container sealed with film produced with the same
Dispositif de soudage par transmission laser, procédé de soudage par transmission laser et récipient scellé par un film fabriqué ainsi

(30) Priorität: 07.02.2013 DE 102013101224
(43) Veröffentlichungstag der Anmeldung: 13.08.2014
(73) Patentinhaber: JENOPTIK Automatisierungstechnik GmbH, 07745 Jena (DE)
(72) Erfinder: Wollmann, Werner, 07747 Jena (DE); Steiner, Christoph, 07743 Jena (DE); Krämer, Wilfried, 07747 Jena (DE); Krzyzaniak, Norbert, 07747 Jena (DE)
(74) Vertreter: Schaller, Renate

(56) Entgegenhaltungen:
- EP-A1- 1 721 831
- DE-A1- 3 105 911
- GB-A- 2 077 183
- JP-A- S6 068 208
- JP-A- 2010 076 246
- US-A1- 2004 095 444
- US-A1- 2005 145 330

## Beschreibung

Die Erfindung betrifft eine Vorrichtung zum Lasertransmissionsschweißen, ein Verfahren zum Lasertransmissionsschweißen und einen damit hergestellten, mit Folie verschlossenen Behälter.

Beim Lasertransmissionsschweißen werden in der Regel zwei Werkstückteile miteinander verbunden. Dazu müssen die beiden Werkstückteile im Fügebereich unmittelbar in Kontakt stehen, sodass sie verschweißt werden können. Eines der Werkstückteile ist für die Laserstrahlung transmittierend und ist während des Schweißens der Laserstrahlquelle zugewandt. Das andere Werkstückteil ist für die Laserstrahlung absorbierend. Die Laserstrahlen durchdringen das transmittierende Werkstückteil und werden in den oberen Schichten des absorbierenden Werkstückteils in Wärmeenergie umgewandelt. Die oberen Schichten des absorbierenden Werkstückteils schmelzen auf, wobei es durch Wärmeleitung auch zu einer Aufschmelzung der angrenzenden Schichten des transmittierenden Werkstückteil kommt. Die beiden Schmelzen können ineinander übergehen und die beiden Werkstückteile im abgekühlten Zustand stoffschlüssig mittels einer Schweißnaht zu einem geschweißten Werkstück verbinden.

Damit sich die Schweißnaht homogen und mit hoher Festigkeit ausbilden kann, ist sicher zu stellen, dass der Prozess der Wärmeleitung im Verlauf der Schweißnaht ohne Unterbrechungen stattfinden kann. Dazu ist der unmittelbare Kontakt der Werkstückteile im Fügebereich erforderlich. Der Kontakt lässt sich mit hoher Sicherheit herstellen, indem die beiden Werkstückteile während des Schweißens über geeignete Vorrichtungen aneinander gedrückt werden.

Ein nach diesem Prinzip arbeitendes Verfahren ist aus der Offenlegungsschrift US 2005/0145330 A1 bekannt, mit dem ein Gehäuse für einen elektrochemischen Sensor mit einem aufgelegten Deckel verschlossen wird. Der Deckel wird während des Schweißens mittels einer Klemmvorrichtung gegen die Stirnflächen des Gehäuses gedrückt. Zum Verfolgen der kreisförmigen Schweißnaht erfolgt eine einfache Relativbewegung zwischen der Laserstrahlquelle und dem Gehäuse, wobei die Schweißnahtbreite im Wesentlichen durch Änderungen der Fokuslage beeinflusst wird. Weitere Varianten von Werkstückteilen, Maßnahmen zur Beeinflussung der Schweißnaht oder anderen Schweißnahtverläufen werden in der oben genannten Schrift nicht beschrieben. Zum Schweißen dünner Folien ist dieses Verfahren nicht geeignet.

Die Offenlegungsschrift US 2004/0095444 A1 offenbart eine Reihe von konstruktiven Ausgestaltungen der Werkstückteile im Fügebereich. Die Kontaktflächen eines oder auch beider Werkstückteile (hier Behälter und Deckel von Tintenpatronen von Druckern) sind gegenüber den benachbarten Oberflächen leicht erhöht angeordnet, sodass diese beim Schweißen, unter dem Einfluss von Hitze und Druck, kontrolliert kollabieren können. Dadurch wird erreicht, dass sich der Fügebereich durch das aufgeschmolzene und verdrängte Material verbreitert, ohne dass sich bei den dünnwandigen Werkstücken die umgebenden Strukturen durch den Wärmeeinfluss verformen. Die Schweißung erfolgt mit einem genau an die Schweißnaht angepassten Schweißkopf, in dem einzelne Lichtleitfasern eines Faserbündels dem Verlauf der Schweißnaht folgend angeordnet sind und mit dem während des Schweißens Druck auf die Werkstückteile ausgeübt wird. Sowohl der aufwändige Schweißkopf als auch der Deckel sind sehr stark an den Verlauf der Schweißnaht gebunden, wodurch diese Schweißmethode sehr spezifisch und unflexibel ist.

Eine in der Offenlegungsschrift DE 10 2007 042 739 A1 offenbarte Spannvorrichtung zum Lasertransmissionsschweißen wird verwendet, um einen transmittierenden Deckel auf ein gehäuseartiges Unterteil zu drücken. Das absorbierende Unterteil weist eine Öffnung auf, die mit dem genau passenden Deckel verschlossen werden soll. Dazu liegt der Deckel mit seinem ebenen Rand auf dem Rand der Öffnung auf. Die aufeinander liegenden Ränder bilden den Fügebereich und sollen mit einer umlaufenden Schweißnaht verbunden werden. Um eine Andruckkraft in den Fügebereich einzubringen wird innerhalb der umlaufenden Schweißnaht ein Andruckkörper (hier Spannbacken) auf den Deckel aufgesetzt. Die Form des Andruckkörpers ist an die Form des Deckels angepasst, sodass dessen Auflagefläche so nah wie möglich an den Fügebereich heran reicht und die Andruckkraft sauber verteilt in den Deckel eingeleitet werden kann.

Der Andruckkörper ist über vier Verbindungsstreben mit einem außen um die umlaufende Schweißnaht geführten, ringförmigen Träger (hier Spannring) der Vorrichtung verbunden. Über die Verbindungsstreben wird die Andruckkraft vom Träger auf den Andruckkörper übertragen. Zwischen Träger und Andruckkörper verbleibt ein Zwischenraum, durch den der Laserstrahl entlang der Schweißnaht auf das Werkstück gerichtet werden kann. Der Zwischenraum ist nur von den Verbindungsstreben unterbrochen. Um die Laserstrahlen so wenig wie möglich abzuschatten weisen die Verbindungsstreben einen möglichst kleinen Querschnitt auf. Der Laserstrahl wird mit einem Scannersystem oder mit einem beweglichen Schweißkopf umlaufend, entlang der Schweißnaht geführt.

In einer Ausführung der Vorrichtung wird das Andrücken des Deckels mit dem Andruckkörper innerhalb, kombiniert mit einer zusätzlich am Träger befestigten Spannbrille außerhalb der Schweißnaht beschrieben. Das setzt voraus, dass am Deckelrand noch ausreichend Angriffsfläche zum Ansetzten der Spannbrille vorhanden ist. Eine Schweißnaht, die den Deckel bis zum äußersten Rand mit dem Unterteil verbindet, ist so nicht mehr möglich.

Nachteil dieser Vorrichtung ist, dass zum Einbringen der Andruckkraft ein passender, stabiler und damit speziell angefertigter Deckel erforderlich ist, der von Hand oder von Handhabungseinrichtungen genau zur Gehäuseöffnung ausgerichtet und aufgelegt werden muss. Zur Handhabung eines aus dünner Folie bestehenden Deckels ist die Vorrichtung nicht vorgesehen und auch nicht geeignet.

Aufgrund des Aufbaus ist davon auszugehen, dass die Anwendung der Spannvorrichtung vorzugsweise an kleinen Werkstücken mit unkomplizierten Verlauf der Schweißnaht erfolgt. An Werkstücken, bei denen der Laserstrahl entlang von langen oder einer Vielzahl von verwinkelten Schweißnähten geführt werden muss, steigt die Bearbeitungszeit durch das Nachführen des Lasers deutlich an. Bei Werkstücken, die benachbart mehrere umlaufenden Schweißnähte aufweisen, wäre auch eine entsprechende Anzahl von Andruckkörpern erforderlich. Die Befestigung der Andruckkörper mit einer entsprechenden Anzahl von Verbindungsstreben würde einen erheblichen Aufwand erfordern, bei dem prinzipbedingt entweder der Laserstrahl mehr abgeschattet oder die Spannvorrichtung zum Übertragen von Andruckkräften zu instabil wird.

Bei einer Vorrichtung zum Laserdurchstrahlschweißen von zwei flächigen Werkstückteilen in der nicht vorveröffentlichten Schrift DE 10 2011 055 203.0 werden diese Nachteile vermieden indem die Andruckkörper mit einer transparenten Trägerplatte verklebt werden. Dadurch wird die Montage, auch mehrerer und unterschiedlich geformter Andruckkörper an der Trägerplatte stark vereinfacht. Die Trägerplatte ist für die Laserstrahlung transparent, sodass sie durch die zwischen den Andruckkörpern verbleibenden Zwischenräume hindurch, ohne Unterbrechungen durch Verbindungsstreben, auf das Werkstück treffen kann. Die Anpassung der Trägerplatte an verschiedene Andruckkräfte oder Werkstückgrößen kann sehr einfach durch entsprechendes Dimensionieren der Trägerplatte erfolgen. Die Laserstrahlquelle ist ein aus einzeln ansteuerbaren Diodenlaseremittern zusammengesetztes Linienarray, dass die Laserstrahlung bei Bedarf in Form einer geschlossenen Linie auf das Werkstück abgeben kann. Für eine komplette Schweißung ist nur eine, vollständige Relativbewegung zwischen dem Werkstück und der Laserstrahlquelle erforderlich. Zum Schweißen des gesamten Werkstücks wird dadurch nur eine sehr kurze Zeit benötigt. In nicht zu verschweißenden Bereichen werden entweder die entsprechenden Diodenlaseremitter abgeschaltet oder werden die Werkstückteile mit den Andruckkörpern abgedeckt.

Die Vorrichtung ist auch dafür geeignet, Folien auf absorbierende Werkstückteile mit einem schalenartigen Aufbau und mit dünnwandigen, in z-Richtung aufrecht stehenden Wandstrukturen aufzuschweißen. Dazu wird die Folie an ihren Rändern aufgenommen und in x- und y-Richtung vorgespannt. Unter dieser Vorspannung wird sie dann unter leichtem Andruck auf dem schalenförmigen Werkstückteil aufgelegt, sodass die in z-Richtung weisenden Stirnflächen der Wandstrukturen in Kontakt mit der Folie stehen. Anschließend erfolgt der Schweißvorgang.

Beim Schweißen werden die Stirnflächen der Wandstrukturen mit der Folie verbunden. Dazu wird hier mindestens ein äußerer und ein innerer Andruckkörper beiderseits der Stirnflächen auf Höhe der Folie positioniert, ohne jedoch in z-Richtung Druck auf die Folie auszuüben. Die im wesentlichen senkrecht zur Folie orientierten Andruckkörper bilden zwischen dem äußeren und inneren Andruckkörper einen begrenzten Zwischenraum, durch den die Laserstrahlung auf die Stirnflächen geführt wird. Der Zwischenraum ist in Richtung der Laserstrahlung in einer Länge ausgebildet, die notwendig ist um eine divergent in den Zwischenraum eintretende Laserstrahlung durch Mehrfachreflexionen an den Wänden der Andruckkörper zu homogenisieren. Die homogenisierte Laserstrahlung trifft auf der Stirnfläche auf und bildet eine flächige Schweißnaht aus. Durch die Homogenisierung wird, auch bei dünnen Wandstrukturen mit entsprechend kleinen Stirnflächen, eine Festigkeit erreicht, die mit herkömmlichen Lasertransmissionsschweißverfahren nicht möglich ist.

Aufgrund der in x-, y-Richtung gespannten Folie ist es mit der in der nicht vorveröffentlichen DE 10 2011 055 203.0 beschriebenen Vorrichtung jedoch nur begrenzt möglich, Toleranzen in der Ebenheit der Stirnwände des absorbierenden Werkstückteils auszugleichen.

Weiterhin besteht bei bestimmten Anwendungen von schalenartig aufgebauten Werkstücken, wie beispielsweise Behältern, ein besonderes Interesse die Wandstrukturen des Behälters so dünn wie möglich zu gestalten. Als Beispiel sei hier ein Wärmetauscher genannt bei dem der Wärmeübergang über sehr dünne innere Trennwände oder über die dünne, als Verschluss für die Behälteröffnung dienende Folie erfolgen soll. Ein Verschweißen von noch dünneren Wandstrukturen wäre jedoch nicht mehr möglich, da bei eine weitere Verkleinerung der Stirnfläche nicht mehr die ausreichende Festigkeit in der Schweißnaht erreicht werden kann.

Es ist die Aufgabe der Erfindung, eine Vorrichtung zu schaffen, die es ermöglicht eine als Abdeckung einer Behälteröffnung vorgesehene Folie mit einer geringen Empfindlichkeit gegenüber Toleranzen der Wandstruktur, auf schmalen Stirnflächen von sehr dünnwandigen Wandstrukturen eines Behälters aufzuschweißen und dabei eine Schweißnaht mit hoher Festigkeit zu erreichen.

Eine weitere Aufgabe der Erfindung ist es, ein Verfahren zu schaffen, bei dem eine als Abdeckung einer Behälteröffnung vorgesehene Folie auf sehr dünnwandigen Wandstrukturen eines Behälters mit hoher Festigkeit aufgeschweißt werden kann.

Außerdem ist es die Aufgabe der Erfindung, einen mit Folie verschließbaren Behälter zu schaffen, bei dem mit geringerem Materialaufwand eine (mit dem Stand der Technik) vergleichbare oder höhere Festigkeit der Schweißnaht und ein besserer mechanischer Schutz der eine Behälteröffnung verschließenden Folie erreicht werden kann.

Erfindungsgemäß werden die Aufgaben für eine Vorrichtung gemäß Anspruch 1, für ein Verfahren gemäß Anspruch 5 und für einen Behälter gemäß Anspruch 7 gelöst.

Vorteilhafte Ausführungen sind aus den jeweils rückbezogenen Unteransprüchen zu entnehmen.

Nachfolgend soll die Erfindung anhand von prinzipiellen Systemen veranschaulicht werden. In den dazugehörigen Zeichnungen zeigen:
- Fig. 1: einen prinzipiellen Aufbau einer Vorrichtung, die nicht Teil der Erfindung ist

- Fig. 2: eine Vorrichtung, die nicht Teil der Erfindung ist, mit einer zwei Andruckkörper umfassenden Andruckeinheit in einer stark vereinfachten Darstellung
- Fig. 3: eine Vorrichtung, die nicht Teil der Erfindung ist, mit mehreren Andruckeinheiten
- Fig. 4: eine Abfolge von Verfahrensschritten, die nicht Teil der Erfindung ist

- Fig. 5: einen verschweißten Behälter, der nicht Teil der Erfindung ist, mit sehr dünnen Trennwänden in einer Schnittdarstellung

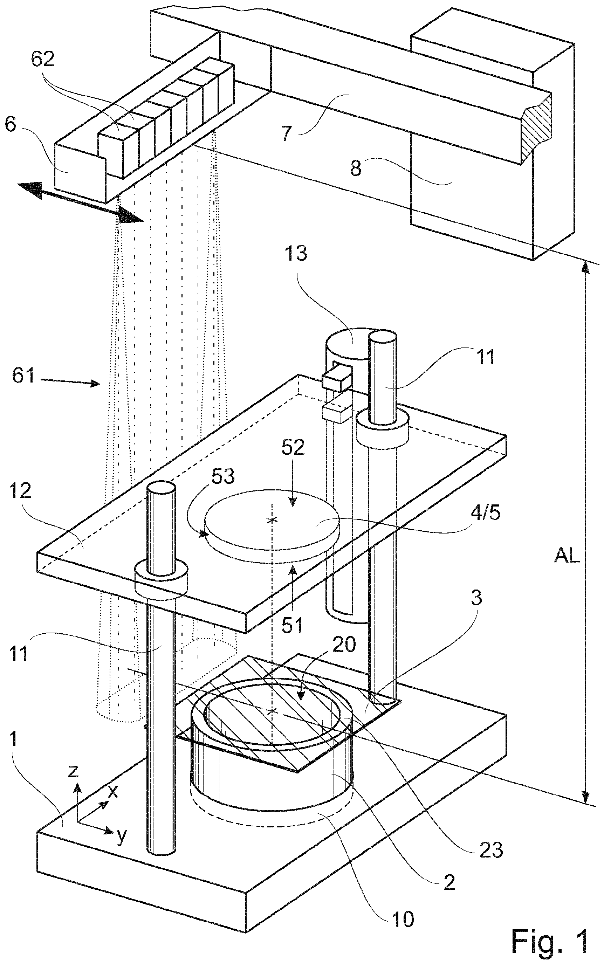

Die in Fig. 1 dargestellte Vorrichtung, die nicht Teil der Erfindung ist, weist im Wesentlichen eine Aufnahme 1, eine Laserstrahlquelle 6, eine Bewegungseinrichtung 7, eine Speicher- und Steuereinheit 8, sowie eine Trägerplatte 12 mit wenigstens einer Andruckeinheit 4 auf. Die Aufnahme 1 ist dazu ausgelegt, einen offenen Behälter 2 gegenüber einer in einer z-Richtung auf die Aufnahme 1 gerichteten und von der Laserstrahlquelle 6 ausgehenden Laserstrahlung 61 in zueinander senkrecht verlaufende Richtungen, der x-, einer y- und der z-Richtung, zu positionieren. Die Laserstrahlquelle 6 ist relativ zu der Aufnahme 1, in der y-Richtung beweglich, an der Bewegungseinrichtung 7 angeordnet. Zur ortsaufgelösten Ansteuerung der Laserstrahlquelle 6 in der x- und der y-Richtung und zur Ansteuerung der Bewegungseinrichtung 7 weist die Vorrichtung die Speicher- und Steuereinheit 8 auf. Zwischen der Aufnahme 1 und der Laserstrahlquelle 6 ist die transparente Trägerplatte 12 angeordnet, die an der der Aufnahme 1 zugewandten Seite die aus wenigstens einem Andruckkörper 5 bestehende Andruckeinheit 4 aufweist. Zur Ausführung einer Relativbewegung in z-Richtung, sind die Aufnahme 1 und die Trägerplatte 12 beweglich miteinander verbunden und wird die Trägerplatte 12 mittels eines Antriebs 13 in der z-Richtung bewegt.

Die Aufnahme 1 ist eine, entsprechend der Größe des aufzunehmenden Behälters 2 dimensionierte stabile Platte, mit einer rechteckigen Grundfläche. Zum Aufnehmen des Behälters 2 verfügt die Aufnahme 1 über aus dem Stand der Technik bekannte Mittel zum Positionieren 10, wie Anschläge, ausgeformte Vertiefungen oder geeignete Spannmittel.

Die Vorrichtung ist zum Verschweißen des offenen Behälters 2 durch Lasertransmissionsschweißen geeignet. Ein derartiger Behälter 2 ist durch eine Stirnflächen und Wandflächen aufweisende Wandstruktur aus einem, die Laserstrahlung 61 absorbierenden Material gebildet, wobei die Wandstruktur wenigstens einen Hohlraum 26 mit einer Querschnittsfläche umschließt. Die von der Wandstruktur begrenzte Querschnittsfläche bildet dabei eine Behälteröffnung 20, die mit einem für die Laserstrahlung 61 transparenten Material, in Form einer Folie 3, zu verschließen ist.

Um die Beschreibung des ersten Ausführungsbeispiel zu vereinfachen, wird hier davon ausgegangen, das es sich bei dem Behälter 2 um einen becherförmigen Behälter mit kreisrunder Querschnittsfläche handelt. Die Wandstruktur besteht in diesem Fall aus einem Hohlzylinder, dessen eines Ende mit einem Boden verschlossen ist und dessen anderes Ende die Behälteröffnung 20 mit ebenfalls kreisrunder Querschnittsfläche aufweist. Die Innenseite des Hohlzylinders bildet eine innere Wandfläche 24 und die Außenseite eine äußere Wandfläche 25 der Wandstruktur. Am Ende der Behälteröffnung 20 bildet die Wandstruktur zwischen den beiden Wandflächen 24 und 25 eine Stirnfläche 23, mit einer Stirnflächenbreite SB aus.

Der in der Aufnahme 1 aufgenommene Behälter 2 ist so positioniert, dass die Stirnfläche 23 der Laserstrahlquelle 6 zugewandt ist, wobei zwischen der Stirnfläche 23 und Laserstrahlquelle 6 in z-Richtung eine an die Eigenschaften der Laserstrahlquelle 6 angepasste Abstrahllänge AL eingestellt ist.
Die Laserstrahlquelle 6 besteht aus einer Vielzahl einzeln ansteuerbarer und in x-Richtung nebeneinander angeordneter Laserstrahlemitter 62, die zusammen ein Linienarray bilden. Es werden bevorzugt Laserstrahlemitter 62 verwendet, welche die Laserstrahlung 61 in einem Wellenlängenbereich von 800 - 1600 nm abgeben. Die ortsaufgelöste Ansteuerung der einzelnen Laserstrahlemitter 62 erfolgt durch die Speicher- und Steuereinheit 8.

Die Laserstrahlung 61 tritt in der Regel divergent aus der zum Linienarray geformten Laserstrahlquelle 6 aus. Die Abstrahllänge AL zwischen der Laserstrahlquelle 6 und der Stirnfläche 23 des Behälters 2 ist so eingestellt, dass sich die aus den einzelnen Laserstrahlemittern 62 austretende Laserstrahlung 61 teilweise auf der Stirnfläche 23 überlagert. Beim gleichzeitigen Betrieb aller Laserstrahlemitter 62 bildet sich die Laserstrahlung 61 in Form einer geschlossenen und in x-Richtung orientierten Laserlinie auf der Stirnfläche 23 ab.

Die Laserstrahlquelle 6 ist fest mit der Bewegungseinrichtung 7 verbunden. Mit der Bewegungseinrichtung 7 wird eine Relativbewegung zwischen der Aufnahme 1 und der Laserstrahlquelle 6 ausgeführt. Die Relativbewegung erfolgt in y-Richtung, in einem Bewegungsbereich, der es während der Relativbewegung ermöglicht die gesamte Stirnfläche 23 des Behälters 2 einmal mit der Laserlinie zu erfassen. Die Steuerung der Relativbewegung erfolgt durch die Speicher- und Steuereinheit 8. Für das Lasertransmissionsschweißen ist es dabei nicht von Bedeutung, ob für die Relativbewegung die Laserstrahlquelle 6 und/oder die Aufnahme 1 bewegt wird. Mit der Bewegungseinrichtung 7 könnte ebenso die Aufnahme 1 in y-Richtung bewegt werden.

Die Trägerplatte 12 ist eine im wesentlichen senkrecht zu der in z-Richtung verlaufenden Laserstrahlung 61 orientierte Glasplatte, die für die Laserstrahlung 61 transparent ist. Sie ist oberhalb des in der Aufnahme 1 positionierten Behälters 2 angeordnet und weist eine der Aufnahme 1 entsprechende Größe auf. Die Trägerplatte 12 ist beweglich mit der Aufnahme 1 verbunden. Dazu wird die Trägerplatte 12 an zwei, fest an der Aufnahme 1 befestigten Linearführungen 11 aufgenommen, die eine Hubbewegung der Trägerplatte 12 in z-Richtung und eine spielfreie Lagerung in x- und y-Richtung ermöglichen. Die Linearführungen 11 sind am Rand der Aufnahme 1 und der Trägerplatte 12 angeordnet, um nicht das Aufnehmen und Positionieren des Behälters 2 einzuschränken. Die Hubbewegung der Trägerplatte 12 wird mit dem Antrieb 13 ausgeführt.

An einer zur Aufnahme 1 gerichteten Unterseite der Trägerplatte 12 ist die Andruckeinheit 4 befestigt. Die Befestigung erfolgt vorteilhaft mittels einer Klebeverbindung. Es kann auch jede andere Art der Befestigung verwendet werden, solange die Verbindung beständig gegen Laserstrahlung 61 ist und die Befestigung nicht den Behälter 2 vor der Laserstrahlung 61 abschattet.

Um der Trägerplatte 12, je nach Dimension der Vorrichtung, eine entsprechende Stabilität zum Befestigen und Tragen der Andruckeinheit 4, zur Befestigung der Linearführungen 11 und zum Aufbringen von Bewegungs- und Druckkräften zu geben, ist die Dicke der transparenten Trägerplatte 12 entsprechend angepasst.

Die Andruckeinheit 4 besteht in dieser Vorrichtung, die nicht Teil der Erfindung ist, aus nur einem Andruckkörper 5. Der Andruckkörper 5 ist ein Profil-Körper mit zwei parallelen Deckflächen 51 und mit einer, das Profil des Andruckkörpers 5 umschließenden Mantelfläche 53. An einer der Deckflächen 51 wird der Andruckkörpers 5 mittels einer Klebeverbindung an der Trägerplatte 12 befestigt. In der weiteren Beschreibung wird diese Deckfläche 51 deshalb als eine Klebefläche 52 bezeichnet. Das Profil des Andruckkörpers 5 ist entsprechend der Querschnittsfläche der Behälteröffnung 20 ausgeformt. Da die Querschnittsfläche der Behälteröffnung 20 des zuvor beschriebenen becherförmigen Behälter 2 kreisförmig ist, weist der Andruckkörper 5 demzufolge eine Zylinderform mit einer zur Aufnahme 1 gewandten kreisförmigen Deckfläche 51 auf, die parallel zu der Stirnfläche 23 des Behälters 2 ausgerichtet ist.

Der Andruckkörper 5 besteht aus einem nicht transparenten Material. Das nicht transparente Material hat den Vorteil, das ein eventuell vorhandener Behälterinhalt vor der Laserstrahlung 61 geschützt wird.

Der Andruckkörper 5 kann grundsätzlich auch aus einem transparenten Material bestehen. Ein transparentes Material ermöglicht, gegenüber dem nicht transparenten Material, ein tieferes Eindringen der Laserstrahlung 61 in die Behälteröffnung 20. Durch das ortsaufgelöste Ansteuern der Laserstrahlquelle 6 in x- und y-Richtung ist es möglich ein Auftreffen der Laserstrahlung 61 im wesentlichen auf die Stirnflächen 23 zu begrenzen.

Bei einem Schweißvorgang wird die Laserstrahlquelle 6 mit der Bewegungseinrichtung 7 in y-Richtung über die Stirnfläche 23 geführt. Die Laserstrahlung 61 durchdringt die transparente Trägerplatte 12 und trifft an allen nicht mit dem Andruckkörper verdeckten Stellen auf der Stirnfläche 23 des Behälters 2 auf.

Durch die Klebeverbindung zwischen Andruckkörper 5 und Trägerplatte 12 wird erreicht, dass sich beim Schweißvorgang eine unterbrechungsfreie Schweißnaht 28 ausbilden kann, da zum Befestigen des Andruckkörpers 5 keinerlei Stege oder andere Halterungen erforderlich sind. Während der Relativbewegung werden die Laserstrahlemitter 62 jeweils nur an den x- und y-Positionen in Betrieb genommen, an denen sie sich gegenüber der Stirnfläche 23 des Behälters 2 befinden. Dadurch ist die Vorrichtung energieeffizient und es wird eine Aufheizung von Teilen der Vorrichtung und eine zusätzliche Beaufschlagung der Wandstrukturen des Behälters 2 verhindert.

Der Andruckkörper 5 wird dazu verwendet, die beim Schweißvorgang zum Verschließen der Behälteröffnung 20 flach auf der Stirnfläche 23 aufgelegte Folie 3 in z-Richtung in die Behälteröffnung 20 einzudrücken. Um die Folie 3 in die Behälteröffnung 20 eindrücken zu können, erfolgt die Befestigung des Andruckkörpers 5 an der Trägerplatte 12 so, dass das Profil des Andruckkörpers 5 in x- und y-Richtung genau zur Aufnahme 1 und damit auch zum Querschnitt der Behälteröffnung 20 des in der Aufnahme 1 positionierten Behälters 2 ausgerichtet ist. Im Fall des becherförmigen Behälters 2 ist die kreisförmige Deckfläche 51 des Andruckkörpers 5 genau mittig zur Behälteröffnung 20 ausgerichtet.

Außerdem ist das Profil und damit die Deckfläche 51 des Andruckkörpers 5 stets um mindestens die doppelte Foliendicke FD kleiner als die Querschnittsfläche der Behälteröffnung 20, sodass zwischen dem Andruckkörper 5 und der inneren Wandfläche 24 mindestens ein der Foliendicke FD entsprechender Spalt 32 verbleibt. Durch diesen Spalt 32 kann die Laserstrahlung 61 auch in einem direkt an die Stirnflächen 23 angrenzenden Randbereich 33 auf den inneren Wandflächen 24 auftreffen.

Das Eindrücken erfolgt bis in eine Eindrücktiefe ET, die etwa der Stirnflächenbreite SB entspricht. Dazu wird der Andruckkörper 5 durch die Hubbewegung der Trägerplatte 12 entlang der Linearführungen 11 in die Behälteröffnung 20 hinein bewegt bis sich dessen Deckfläche 51 in der entsprechenden Eindrücktiefe ET, unterhalb der Stirnfläche 23 des Behälters 2 befindet. Um die Eindrücktiefe ET zu erreichen, muss der Andruckkörper 5 eine Höhe (Abstand zwischen der Deckfläche 52 und der Klebefläche 52) aufweisen, die mindestens so groß wie die gewünschte Eindrücktiefe ET ist. Da sich die Stirnflächenbreiten SB in der Regel im Bereich < 10mm bewegen, ist auch die Höhe des Andruckkörpers 5 sehr flach.

Die Hubbewegung der Trägerplatte 12 zusammen mit dem Andruckkörper 5, wird durch den Antrieb 13 ausgeführt, der die transparenten Trägerplatte 12 in z-Richtung beliebig positionieren kann. Die Ansteuerung des Antriebs 13 erfolgt mit der Speicher- und Steuereinheit 8. Entsprechend der geringen Eindrücktief ET ist die Hubbewegung sehr klein.

Anstatt die Trägerplatte 12 zu bewegen ist es genau so möglich die Hubbewegung durch ein Anheben der Aufnahme 1 in z-Richtung auszuführen.

Eine thermische Wirkung der Laserstrahlung 61 führt zum Aufschmelzen der Stirnflächen 23 und des an die Stirnflächen 23 angrenzenden Randbereichs 33. Durch Wärmeleitung wird auch die auf den Stirnflächen 23 aufliegenden Folie 3 erhitzt und damit plastisch verformbar. Dadurch ist das Eindrücken der Folie 3 in die Behälteröffnung 20 möglich. Aufgrund der geringen Foliendicke FD ist für das Eindrücken kein besonderer Kraftaufwand erforderlich. Die Eindrücktiefe ET wird durch die Speicher- und Steuereinheit 8 mit dem Antrieb 13 begrenzt.

Beim Eindrücken wird die Folie 3 über den Stirnflächen 23 straff gezogen und an den Randbereich 33 angelegt. Dadurch wird die Folie 3 an den Stirnflächen 23 und im Randbereich 33, mit den inneren Wandflächen 24 der Wandstruktur verschweißt. Die dadurch entstehende Schweißnaht 28 ist damit stets breiter als die Stirnflächenbreite SB. Erfindungsgemäß enthält die Andruckeinheit 4 neben dem zuvor beschriebenen Andruckkörper 5 wenigstens einen weiteren, äußeren Andruckkörper, der die Wandstruktur des Behälters 2 umschließt. Entsprechend dem becherförmigen Behälter aus dem ersten Ausführungsbeispiel ist der äußere Andruckkörper dazu ringförmig gestaltet, wobei der äußere Andruckkörper koaxial zum zylinderförmigen Andruckkörper 5 an der Trägerplatte 12 befestigt ist. Der äußere Andruckkörper weist dazu einen Innendurchmesser auf, der mindestens um die doppelte Foliendicke FD größerer als die Abmessung der Stirnfläche 23 des Behälters 2 ist, sodass zwischen dem äußeren Andruckkörper und der äußeren Wandfläche 25 mindestens ein der Foliendicke FD entsprechender Spalt 32 verbleibt. Beim Ausführen der Hubbewegung wird die Folie 3 durch den äußeren Andruckkörper auch an die äußeren Wandflächen 25 der Wandstruktur angelegt und im Randbereich 33 der äußeren Wandfläche 25 mit dem Behälter verschweißt. Die Schweißnaht 28 wird dadurch zusätzlich um den Randbereich 33 der äußeren Wandfläche 25 verbreitert.

In einer weiteren Vorrichtung, die nicht Teil der Erfindung ist, ist die zum Verschweißen der Behälteröffnung 20 vorgesehene Andruckeinheit 4 aus zwei Andruckkörpern 5 aufgebaut. Die Andruckeinheit 4 mit den zwei Andruckkörpern 5 ist erforderlich, wenn die zu verschweißende Behälteröffnung 20 neben der Außenwand 21 auch eine Trennwand 22 aufweist, die den Hohlraum 26 des Behälters 2 in zwei Kammern 27 aufteilt.

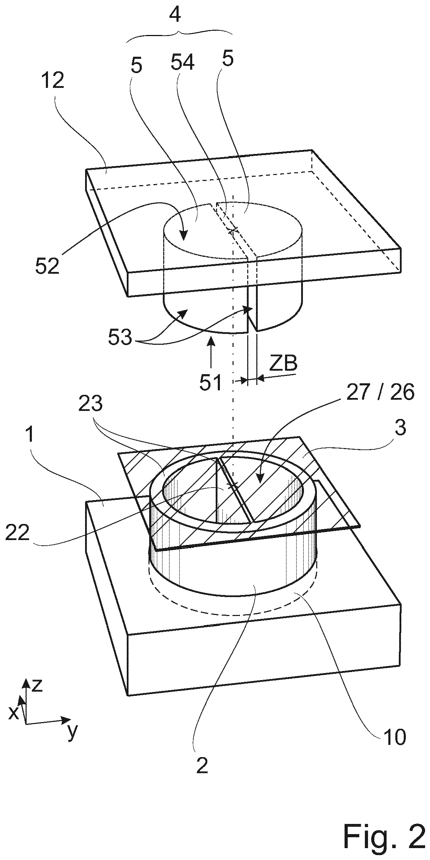

Wie in Fig. 2 vereinfacht dargestellt, sind die Andruckkörper 5 nebeneinander liegend an der Trägerplatte 12 befestigt, wobei die zur Aufnahme 1 weisenden Deckflächen 51 der Andruckkörper 5 in einer gemeinsamen Ebene angeordnet sind. Zwischen den Deckflächen 51 der benachbarten Andruckkörper 5 verbleibt ein entsprechend der Wandstrukturen des Behälters 2 angeordneter Zwischenraum 54. Durch den Zwischenraum 54 kann die Laserstrahlung 61 auch auf die Stirnfläche 23 der Trennwand 22 treffen.

Die Zwischenraumbreite ZB ist an die Stirnflächenbreite SB der Trennwand 22 angepasst. Sie ist um mindestens die doppelte Foliendicke FD größer als die Stirnflächenbreite SB, sodass zwischen den beiden Andruckkörpern 5 und den inneren Wandfläche 24 der Spalt 32 entsteht. Der Zwischenraum 54 ist symmetrisch zur Stirnfläche 23 ausgerichtet, sodass der Spalt 32 zu beiden Seiten der Trennwand 22 genau die gleiche Größe aufweist. Durch den Spalt 32 erreicht die Laserstrahlung 61 auch an der Trennwand 22, den Randbereich 33 der inneren Wandflächen 24.

Bei der in Fig. 2 dargestellten Andruckeinheit 4 werden die sich gegenüber stehenden Mantelflächen 53 der beiden benachbarten Andruckkörper 5 zur Homogenisierung der Laserstrahlung 61 verwendet. Dazu weisen die Andruckkörper 5 eine größere Höhe auf, als zum Eindrücken der Folie 3 notwendig ist. Weiterhin sind die sich gegenüberstehenden Mantelflächen 53 als Reflektoren für die Laserstrahlung 61 ausgeführt und sind zueinander parallel und senkrecht zu den Stirnflächen 23 angeordnet. Ab einem bestimmten, an einen Divergenzwinkel der Laserstrahlung 61 angepassten Verhältnis zwischen Höhe der Andruckkörper 5 und Zwischenraumbreite ZB ist es möglich, dass die divergent in den Zwischenraum 54 eintretende Laserstrahlung 61 mehrfach an den Mantelflächen 53 hin und her reflektiert wird, bevor sie auf der Stirnfläche 23 der Trennwand 22 auftrifft. Die Mehrfachreflexion führt zu einer Durchmischung und damit zu einer homogen über die Stirnfläche 23 verteilten Laserstrahlung 61. Die Schweißnaht 28 wird dadurch ebenfalls sehr homogen ausgebildet, wodurch eine höhere Festigkeit erreichbar ist. Ausgehend von einer auf die Stirnflächenbreite SB angepassten Zwischenraumbreite ZB ist es, unter Beachtung des Divergenzwinkels der Laserstrahlung 61, auch möglich die Mantelflächen 53 leicht gegeneinander anzuwinkeln, sodass sich der Zwischenraum 54 entgegen der Abstrahlrichtung der Laserstrahlquelle 6 trichterförmig verbreitert. Die trichterförmige Verbreiterung führt dazu, dass mehr Laserstrahlung 61 in den Zwischenraum 54 eindringen und auf die Trennwand 22 konzentriert werden kann. Somit kann mit einer vergleichsweise geringeren Laserleistung gearbeitet werden als bei parallelen Mantelflächen 53 gleicher Höhe. Durch das Anwinkeln wird außerdem die Anzahl der Mehrfachreflexionen gesteigert, sodass entweder bei vergleichbarer Homogenisierung der Laserstrahlung 61 die Höhe der Andruckkörper 5 verringert oder bei gleichbleibender Höhe der Andruckkörper 5 die Homogenisierung verbessert werden kann.

In einem weiteren Ausführungsbeispiel wird die Vorrichtung dazu verwendet, während einer Relativbewegung der Laserstrahlquelle 6 mehrerer Behälter 2 gleichzeitig zu verschweißen.

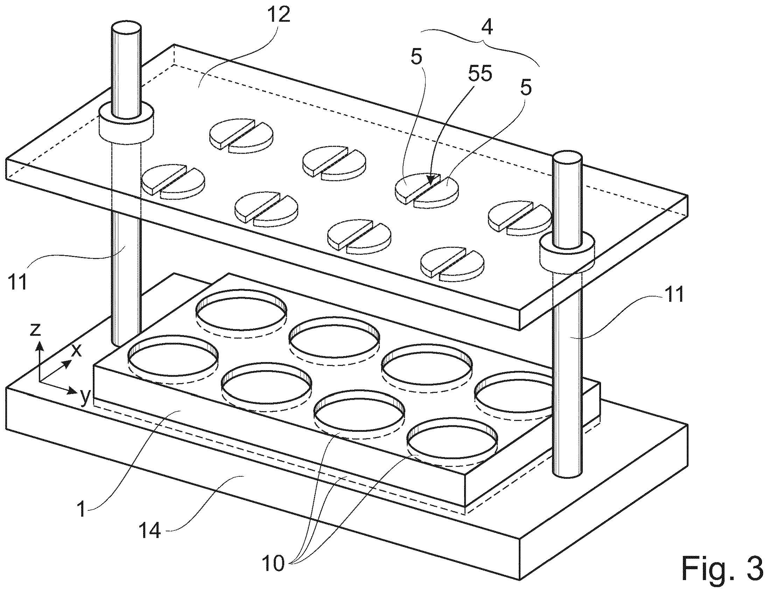

Zu diesem Zweck wird die Aufnahme 1 von der restlichen Vorrichtung getrennt. Wie in Fig. 3 dargestellt, wird die Vorrichtung um eine Grundplatte 14 erweitert, auf der die Aufnahme 1 positioniert und mit einer trennbaren Verbindung an der Grundplatte 14 befestigt wird. Die Linearführungen 11 zum Lagern der Trägerplatte 12 werden ebenfalls an der Grundplatte 14 aufgenommen. Die trennbare Verbindung ermöglich eine leichtere Bestückung der Aufnahme 1 mit den Behältern 2 außerhalb der Vorrichtung. Dadurch ist es möglich, bereits während des Schweißens von Behältern 2 eine baugleiche zweite Aufnahme mit Behältern 2 zu bestücken, und diese nach dem Schweißen mit der in der Vorrichtung befindlichen Aufnahme 1 auszutauschen.

Die Aufnahme 1 ist in einer entsprechenden Größe dimensioniert und weist eine Vielzahl von Mitteln zum Positionieren 10 auf. Dadurch können mehrere Behälter 2 nebeneinander positioniert werden, sodass sich deren Stirnflächen 23 in einer gemeinsamen Ebene gegenüber der Laserstrahlquelle 6 befinden.

Gegenüber der auf der Grundplatte 14 positionierten Aufnahme 1 ist die transparente Trägerplatte 12 angeordnet, an der eine den aufgenommenen Behältern 2 entsprechende Anzahl an Andruckeinheiten 4 befestigt ist. Die Andruckeinheiten 4 können wiederum aus jeweils einem oder mehreren Andruckkörpern 5 bestehen. Die Andruckkörper 5 sind in x-, und y-Richtung den Behälteröffnungen 20 genau gegenüberliegend an der Trägerplatte 12 befestigt.

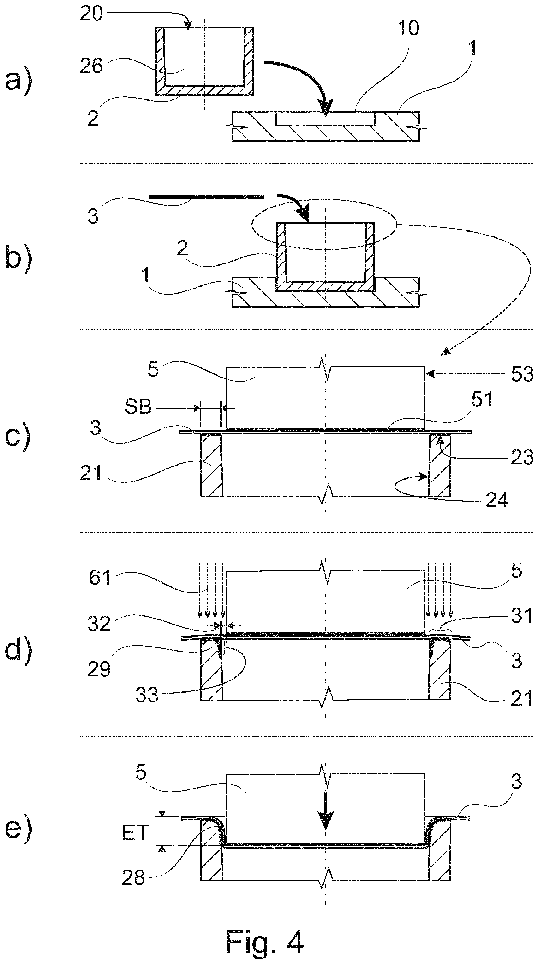

Bei einem Verfahren zum Lasertransmissionsschweißen eines mit einer Folie 3 zu verschließenden offenen Behälters 2, das nicht Teil der Erfingung ist, wird, wie in Fig.4 dargestellt, in einem Verfahrensschritt a) der Behälter 2 in einer Aufnahme 1 positioniert. Der Behälter 2 ist durch eine Stirnflächen 23, innere Wandflächen 24 und äußere Wandflächen 25 aufweisenden Wandstruktur gebildet, wobei die Wandstruktur wenigstens einen Hohlraum 26 mit einer Querschnittsfläche umschließt und die Stirnflächen 23 eine Stirnflächenbreite SB aufweisen. An den Stirnflächen 23 der Wandstruktur bildet der Behälter 2 eine der Querschnittsfläche entsprechende Behälteröffnung 20 aus. Durch das Positionieren ist der Behälter 2 in allen Raumrichtungen eines kartesischen Koordinatensystems gegenüber einer Laserstrahlquelle 6 ausgerichtet. Eine von der Laserstrahlquelle 6 in z-Richtung ausgehende Laserstrahlung 61, kann nahezu senkrecht auf die in x- und y-Richtung ausgedehnten Stirnflächen 23 auftreffen. Zum Verschließen der Behälteröffnung 20 wird in einem Verfahrensschritt b) die Folie 3 unmittelbar auf den Stirnflächen 23 aufgelegt, sodass die Stirnflächen 23 und die Behälteröffnung 20 vollständig mit der Folie 3 überdeckt ist. Der Behälter 2 besteht zumindest an den zu verschweißenden Stirnflächen 23 aus einem thermoplastischen Kunststoff, der die von der Laserstrahlquelle 6 ausgehenden Laserstrahlung 61 absorbieren kann.

Als Folie 3 wird eine dünne, thermoplastisch verformbare Kunststofffolie mit einer Foliendicke FD verwendet, wobei mindestens ein Kunststoffanteil der Folie 3 auch im Kunststoff des Behälters 2 vorhanden ist. Die Folie 3 ist für die verwendete Laserstrahlung 61 transparent.

Gegenüber einem Deckel zum Verschließen des Behälters 2 besitzt die Folie 3 den Vorteil, dass sie weder in den Abmessungen noch in der Ausrichtung zur Behälteröffnung 20 in besonderer Weise angepasst werden muss. Es ist ausreichend, dass sie die Behälteröffnung 20 und die Stirnfläche 23 vollständig überdecken kann.

In einem Verfahrensschritt c) wird oberhalb der Querschnittsfläche und der auf der Behälteröffnung 20 aufgelegten Folie 3 eine Andruckeinheit 4 positioniert. Die Anduckeinheit 4 besteht aus wenigstens einem Andruckkörper 5 mit einer Deckfläche 51. Die Deckfläche 51 ist parallel zu den Stirnflächen 23 und unmittelbar an der Folie 3 anliegenden ausgerichtet. Beim Positionieren wird mit dem Andruckkörper 5 keinerlei Druck auf die Folie 3 ausgeübt.

Der Andruckkörper 5 ist in x- und y-Richtung entsprechend der Querschnittsfläche der Behälteröffnung 20 ausgeformt und passt, bis auf einen umlaufenden und der Foliendicke FD entsprechenden Spalt 32, zwischen dem Andruckkörper 5 und den inneren Wandflächen 24 in die Behälteröffnung 20 hinein. Dadurch wird es in einem späteren Verfahrensschritt möglich den Andruckkörper 5 in z-Richtung bis in die Behälteröffnung 20 hinein abzusenken.

Im nachfolgenden Verfahrensschritt d) werden die Stirnflächen 23 mit der Laserstrahlung 61 beaufschlagt. Dazu wird die Laserstrahlquelle 6 in einer in y-Richtung ausgeführten Relativbewegung gegenüber der Aufnahme 1 über die Behälteröffnung 20 geführt. Aufgrund der flächigen Ausdehnung der Behälteröffnung 20 ist die verwendete Laserstrahlquelle 6 aus mehreren, einzeln ansteuerbaren und nebeneinander angeordneten Laserstrahlemittern 62 aufgebaut, sodass diese zusammen ein Linienarray bilden. Durch das Linienarray wird die Behälteröffnung 20 in x-Richtung vollständig von der Laserstrahlquelle 6 überspannt. Bei der Relativbewegung werden die einzelnen Laserstrahlemitter 62 nur dann angesteuert, wenn sie mit der von ihnen ausgehenden Laserstrahlung 61 die Stirnflächen 23 erreichen können. Außerhalb der Stirnflächen 23 sind die Laserstrahlemitter 62 nicht in Betrieb. Dadurch wird eine hohe Energieeffizienz des Verfahrens erreicht.

Die an den Stirnflächen 23 absorbierte Laserstrahlung 61 erhitzt den absorbierenden Kunststoff des Behälters 2 und bildet eine oberflächliche Schmelze 29 aus. Eine von der Schmelze 29 ausgehende Wärme wird durch Wärmeleitung an die unmittelbar auf den Stirnflächen 23 aufliegende Folie 3 übertragen, wodurch diese erweicht und einen thermoplastisch verformbaren Bereich 31 ausbildet.

Ein Teil der Laserstrahlung 61 trifft durch den, zwischen dem Andruckkörper 5 und der Wandstruktur verbleibenden Spalt 32 auf einen Randbereich 33 der inneren Wandflächen 24 auf, wodurch sich auch in diesem Randbereich 33 die oberflächliche Schmelze 29 ausbilden kann.

Nach Ausbildung der Schmelze 29 und des thermoplastisch verformbaren Bereichs 31 wird der Andruckkörper 5 im unmittelbar folgenden, letzten Verfahrensschritt e) in z-Richtung, in die Behälteröffnung 20 hinein bewegt. Dazu wird der Andruckkörper 5 mit der Deckfläche 51 bis in eine, etwa der Dicke der Wandstrukturen entsprechenden Eindrücktiefe ET unterhalb der Stirnflächen 23 abgesenkt. Durch den Spalt 32 kann die Folie 3 mit in die Behälteröffnung 20 eingedrückt werden, sodass diese im thermoplastisch verformbaren Bereich 31 über den Stirnflächen 23 straff gezogen wird. Durch das Absenken des Andruckkörpers 5 legt sich die Folie 3 auch an der Schmelze 29 des Randbereichs 33 der inneren Wandflächen 24 an. Durch das Straffziehen über die Schmelze 29 der Stirn- und Wandflächen 23 und 24 wird ein sicheres Anliegen der Folie 3 an der Wandstruktur erreicht, sodass im Bereich der Schmelze 29 eine den Behälter 2 und die Folie 3 fest verbindende Schweißnaht 28 entsteht.

Beim Straffziehen werden die angeschmolzenen Stirn- und Wandflächen 23 und 24 auch plastisch verformt. Es kommt zu einer leichten Absenkung in z-Richtung und zu einer Verrundung der zuvor ebenen Stirnfläche 23 an einem Übergang der Stirnflächen 23 zu den inneren Wandflächen 24. Die Absenkung wird vorteilhaft dazu verwendet, Toleranzen in der Ebenheit der Stirnfläche 23 auszugleichen. Damit ist dieses Verfahren besonders gut geeignet um niedrigviskose Kunststoffe zu verschweißen, die mit dem sonst üblichen Spiegelschweißverfahren (Verwendung einer heißer Platte als Wärmequelle zum Aufschmelzen der Stirnfläche) nicht verschweißt werden können.

Sowohl das Anlegen an die inneren Wandflächen 24 als auch die Verrundung führen, gegenüber dem ausschließlich an ebenen Stirnflächen 23 ausgeführten Lasertransmissionsschweißen zu einer deutlichen Verbreiterung der Schweißnaht 28. Durch das Verfahren kann entweder bei vergleichbar starken Wandstrukturen eine höhere Festigkeit der Schweißnaht 28 oder bei vergleichbarer Festigkeit der Schweißnaht 28 dünnere Wandstrukturen verwendet werden.

Durch das Absenken ist es außerdem möglich auch sehr dünnwandige Wandstrukturen zu verschweißen. Bei dünnwandigen Wandstrukturen führt die Beaufschlagung der Stirnflächen 23 mit Laserstrahlung 61 zu einem vollständigen Durchschmelzen der Wandstruktur im Bereich der Stirnflächen 23. Beim Absenken wird die durchgeschmolzene Wandstruktur, zusätzlich zum Verrunden, mit der Folie gestaucht. Dadurch vergrößert sich die Stirnflächenbreite SB und es steht mehr Volumen der Wandstruktur zur Ausbildung der Schweißnaht 28 zur Verfügung.

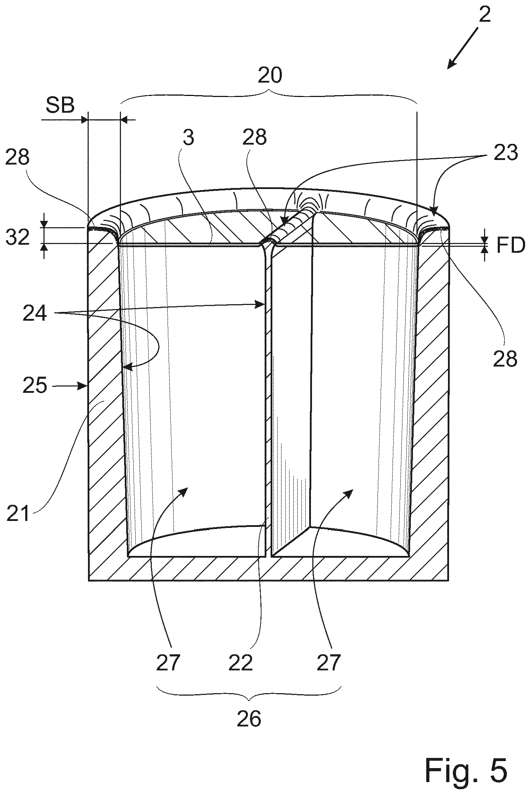

In einem weiteren Verfahren, das nicht Teil der Erfindung ist, können während der Relativbewegung zwischen Laserstrahlquelle 6 und Aufnahme 1 auch mehrere Behälter 2 verschweißt werden. Dazu werden die Behälter 2, mit den Stirnflächen 23 in einer Ebene, gegenüber der Laserstrahlquelle 6 positioniert. Anschließend wird eine, alle Behälteröffnungen 20 der in der Aufnahme 1 positionierten Behälter 2 überdeckende Folie 3 auf die Stirnflächen 23 aufgelegt. Gegenüber und anliegend an der Folie 3, wird dann eine der Behälteröffnungen 20 entsprechende Anzahl an ausgerichteten und ebenfalls in einer Ebene befindlichen Andruckeinheiten 4, parallel zu den Stirnflächen 23 positioniert. Die Andruckeinheiten 4 können dabei auch aus mehreren Andruckkörpern 5 bestehen. Mit der Laserstrahlquelle 6, die mit der vom Linienarray ausgehenden Laserstrahlung 61 alle Behälteröffnungen 20 in x-Richtung erfasst, werden während einer Relativbewegung in y-Richtung die Stirnflächen 23 aller Behälteröffnungen 20 mit Laserstrahlung 61 beaufschlagt. Währen der Relativbewegung werden die einzelnen Laserstrahlemitter 62 des Linienarrays nur dann angesteuert, wenn die von ihnen ausgehende Laserstrahlung 61 auf eine Stirnfläche 23 treffen kann. Die an den Stirnflächen 23 absorbierte Laserstrahlung 61 führt zur Ausbildung einer oberflächlichen Schmelze 29, die durch Wärmeleitung auch die aufliegende Folie 3 erwärmt. Dadurch wird die Folie 3 in den erwärmten Bereichen thermoplastisch verformbar, sodass sie durch eine Bewegung aller Andruckeinheiten 4 in die Behälteröffnungen 20 hinein eingedrückt werden kann. Dabei werden alle Behälter 2 gleichzeitig verschweißt. In einem zusätzlichen Verfahrensschritt, der nicht Teil der Erfindung ist, werden alle über die Stirnflächen 23 der Behälteröffnungen 20 herausragenden Ränder der Folie 3, bündig zu äußeren Wandflächen 25 der Wandstrukturen abgetrennt. Dazu wird eine den äußeren Abmessungen der Stirnflächen 23 und, bei mehreren Behältern 2, eine der Anordnung der Behälter 2 in der Aufnahme 1 entsprechende Schneideinheit bis unterhalb der Stirnflächen 23 abgesenkt, sodass die Ränder der Folie 3 abgeschert werden. Der in Fig. 5 dargestellte lasertransmissionsgeschweißte Behälter, der nicht Teil der Erfindung ist, weist eine Stirnflächen 23, innere Wandflächen 24 und äußere Wandflächen 25 aufweisende Wandstruktur auf. Die Wandstruktur besteht zumindest im Bereich der Stirnflächen 23 aus einem thermoplastischen Kunststoff, der für eine zum Lasertransmissionsschweißen verwendete Laserstrahlung 61 absorbierend ist. Die Wandstruktur umschließt wenigstens einen Hohlraum 26 mit einer Querschnittsfläche und verfügt über eine in Wandrichtung steife Außenwand 21. Der Hohlraum 26 kann leer sein (für eine spätere Befüllung mit Luft gefüllt) oder mit einem gasförmigen, flüssigen oder festen Medium gefüllt sein. An den Stirnflächen 23 der Außenwand 21 bildet der Behälter 2 wenigstens eine, der Querschnittsfläche entsprechende Behälteröffnung 20 aus, an welcher der Hohlraum 26 des Behälters 2 mit einer Folie 3 verschlossen ist.

Als die Folie 3 wird eine dünne, thermoplastisch verformbare Kunststofffolie verwendet, die mindestens für die zum Lasertransmissionsschweißen verwendete Laserstrahlung 61 transparent ist. Die Folie 3 weist mindestens einen Kunststoffanteil auf, der auch im Kunststoff des Behälters 2 vorhanden ist.

Die Folie 3 ist mittels einer Schweißnaht 28 mit dem Behälter 2 verbunden. Dabei ist die parallel zu den Stirnflächen 23 angeordnete Folie 3 bis unterhalb der Stirnflächen 23, mit einer Eindrücktiefe ET, in die Behälteröffnung 20 eingedrückt. Die Eindrücktiefe ET entspricht in etwa der Dicke der Wandstruktur. Durch die eingedrückte Folie 3 ist zwischen den Stirnflächen 23 und einem an die Stirnflächen 23 angrenzenden Randbereich 33 der inneren Wandflächen 24 eine Verrundung entstanden. Die Schweißnaht 28 erstreckt sich sowohl über die, eine Stirnflächenbreite SB aufweisenden Stirnflächen 23, als auch über den Randbereich 33. Die Schweißnaht 28 hat dadurch eine Schweißnahtbreite, die gegenüber einem ausschließlich an den Stirnflächen 23 verschweißten Behälter 2, etwa dreifach größer. Mit der größeren Schweißnahtbreite kann eine höhere Festigkeit der Schweißnaht 28 erreicht werden.

Die innerhalb der Wandstruktur in den Hohlraum 26 des Behälters 2 eingedrückte Folie 3 ist deutlich besser vor äußeren mechanischen Beschädigungen geschützt als eine bündig zur Stirnfläche 23 verschweißten Folie 3.

Durch die auf die Stirnflächen 23 aufgelegte und über die Stirnflächen 23 gezogene Folie 3 wird das im Bereich der Schweißnaht 28 vorhandene Materialvolumen der Wandstruktur vergrößert. Dieser Effekt und die fensterartig in die Behälteröffnung 20 eingedrückte Folie 3 führt zu einer Versteifung des Behälters 2 im Bereich der Behälteröffnung 20 und damit zu einer Erhöhung der Stabilität über die Querschnittsfläche des Behälters 2.

Die Wandstruktur des lasertransmissionsgeschweißten Behälters 2 kann ausschließlich aus der Außenwand 21 bestehen, die den Hohlraum 26 des Behälters 2 umgibt. Die Schweißnaht 28 an der mit Folie 3 verschlossenen Behälteröffnung 20 erstreckt sich in diesem Fall nur über die verrundete Stirnflächen 23 und den Randbereich 33 der innere Wandflächen 24 der Außenwand 21.

Wie in Fig. 5 gezeigt, kann der lasertransmissionsgeschweißte Behälter 2 neben der Außenwand 21 auch zusätzliche Trennwände 22 im Hohlraum 26 aufweisen, die den Hohlraum 26 in einzelne Kammern 27 aufteilen. Die Stirnflächen 23 der Trennwände 22 befinden sich in der Regel mit den Stirnflächen 23 der Außenwand 21 in einer Ebene. Die Schweißnaht 28 erstreckt sich an den Trennwänden 22 über die Stirnflächen 23 und die beiden Randbereiche 33 der inneren Wandflächen 24 der Trennwände 22.

Weist die Außenwand 21 eine ausreichende Steifigkeit in Wandrichtung auf, können die Trennwände 22 auch wesentlich dünner als die Außenwand 21 ausgeführt sein.

Bei sehr dünnen Trennwänden 22 können die Stirnflächen 23 der Trennwände 22 auch zwischen der Ebene der Stirnflächen 23 der Außenwand 21 und der Eindrücktiefe ET der Folie 3 liegen. Eine solche Absenkung der Stirnflächen 23 ist gewünscht und entsteht bei der Herstellung des Behälters 2 indem die sehr dünnen Trennwände 22 mit der Folie 3 gestaucht werden. Durch das Stauchen ist das für die Schweißnaht 26 nutzbare Volumen der Trennwände 22 im Bereich der Stirnflächen 23 größer, sodass die Stirnflächenbreite SB ebenfalls größer ist. Die Schweißnaht 28 weist, bei geringerem Materialaufwand an den sehr dünnen Trennwänden 22, eine vergleichbare Festigkeit wie an einem Behälter 2 mit dickeren Trennwänden 22 auf.

Ein Behälter 2 kann besonders vorteilhaft als Wärmetauscher verwendet werden, bei dem der Wärmeübergang über die Trennwände 22 erfolgen soll. Hierbei ist es von besonderen Interesse die Trennwände 22 so dünn wie möglich zu gestalten um den optimalen Wärmeübergang zu gewährleisten und gleichzeitig eine ausreichende Druckfestigkeit des Behälters 2 zu erreichen. Durch die besondere Ausführung der Schweißnähte 28 ist es auch an sehr dünnen Trennwänden 22 möglich eine hohe Festigkeit zwischen der Folie 3 und dem Behälter 3 zu erreichen. Wie experimentell ermittelt wurde, konnte gegenüber anderen Behältern, die ausschließlich über eine Verbindung an den Stirnflächen 23 verschlossen sind, der Berstdruck deutlich gesteigert werden.

In einer erfindungsgemäßen Ausführung des Behälters 2 ist die Folie 3 neben der Schweißung im Randbereich 33 der inneren Wandflächen 24 auch mit dem Randbereich 33 der äußeren Wandflächen 25 verbunden. Dazu ist die Folie 3 bis unterhalb der Stirnflächen 23 auch über den Randbereich 33 der äußeren Wandflächen 25 der Außenwand 21 tief gezogen, wobei die Tiefe des Tiefziehens etwa der Eindrücktiefe ET entspricht. Durch die tiefgezogene Folie 3 ist zwischen den Stirnflächen 23 und dem an die Stirnflächen 23 angrenzenden Randbereich 33 der äußeren Wandflächen 24 ebenfalls eine Verrundung entstanden. Die Schweißnaht 28 erstreckt sich über den Randbereich 33 der inneren Wandfläche 24, die Stirnfläche 23 und den Randbereich 33 der äußeren Wandfläche 25. Damit ist die Schweißnahtbreite gegenüber dem ausschließlich an den Stirnflächen 23 verschweißten Behälter 2 etwa vierfach größer, sodass auch die Festigkeit der Schweißnaht 28 nochmals gesteigert ist.

### Bezugszeichenliste

- 1: Aufnahme
- 10: Mittel zum Positionieren
- 11: Linearführung
- 12: transparente Trägerplatte
- 13: Antrieb
- 14: Grundplatte
- 2: Behälter
- 20: Behälteröffnung
- 21: Außenwand
- 22: Trennwand
- 23: Stirnfläche
- 24: innere Wandfläche
- 25: äußere Wandfläche
- 26: Hohlraum
- 27: Kammer
- 28: Schweißnaht
- 29: Schmelze
- 3: Folie
- 31: thermoplastische verformbarer Bereich
- 32: Spalt
- 33: Randbereich
- 4: Andruckeinheit
- 5: Andruckkörper
- 51: Deckfläche
- 52: Klebefläche
- 53: Mantelfläche
- 54: Zwischenraum
- 6: Laserstrahlquelle
- 61: Laserstrahlung
- 62: Laserstrahlemitter
- 7: Bewegungseinrichtung
- 8: Speicher- und Steuereinheit
- SB: Stirnflächenbreite
- ZB: Zwischenraumbreite
- FD: Foliendicke
- ET: Eindrücktiefe
- AL: Abstrahllänge

## Patentansprüche

1. Vorrichtung zum Lasertransmissionsschweißen mindestens einer in sich geschlossenen Schweißnaht (28) zwischen einem offenen Behälter (2), der durch eine Stirnflächen (23) sowie innere und äußere Wandflächen (24, 25) aufweisende Wandstruktur gebildet ist, wobei die Wandstruktur wenigstens einen Hohlraum (26) mit einer Querschnittsfläche umschließt, und einer die Stirnflächen (23) abdeckenden und damit den Behälter (2) verschließenden Folie (3), umfassend eine Laserstrahlquelle (6), die eine Vielzahl von einzeln ansteuerbaren und in eine x-Richtung in einem Linienarray angeordneten Laserstrahlemittern (62) aufweist, eine Aufnahme (1), die dazu ausgelegt ist den Behälter (2) gegenüber einer in einer z-Richtung auf die Aufnahme (1) gerichteten und von der Laserstrahlquelle (6) ausgehenden Laserstrahlung (61) in der x-Richtung, der z- Richtung und einer y- Richtung, wobei die X-Richtung, die y-Richtung und die z-Richtung zueinander senkrecht verlaufen zu positionieren, eine Bewegungseinrichtung (7) zum relativen Bewegen der Laserstrahlquelle (6) in der y-Richtung, eine Speicher- und Steuereinheit (8) zum ortsaufgelösten Ansteuern der Laserstrahlemitter (62), und mindestens eine der Laserstrahlquelle (6) in Abstrahlrichtung nachgeordnete und an einer senkrecht zur Laserstrahlung (61) orientierten und für die Laserstrahlung (61) transparenten Trägerplatte (12) befestigten Andruckeinheit (4), die wenigstens einen Andruckkörper (5) mit einer zu den Stirnflächen (23) parallel ausgerichteten Deckfläche (51) aufweist,
wobei die Deckfläche (51) des wenigstens einen Andruckkörpers (5) mindestens um eine doppelte Foliendicke (FD) kleiner als die wenigstens eine Querschnittsfläche ist, sodass zwischen dem Andruckkörper (5) und der Wandstruktur mindestens ein der Foliendicke (FD) entsprechender Spalt (32) verbleibt und der wenigstens eine Andruckkörper (5) gegenüber der Aufnahme (1) soweit relativ in z-Richtung bewegbar ist, dass die Deckfläche (51) des wenigstens einen Andruckkörpers (5) unter die Stirnflächen (23) der Wandstruktur in den Behälter (2) absenkbar ist, sodass sich die auf die Stirnflächen (23) aufgelegte Folie (3) auch in einem an die Stirnflächen (23) angrenzenden Randbereich (33) an die inneren Wandflächen (24) anlegen kann, und daher auch an diesem Randbereich mit den inneren Wandflächen verschweißt wird, womit die Schweißnaht (28) mit einer Schweißnahtbreite größer einer Stirnflächenbreite (SB) geschweißt werden kann,
**dadurch gekennzeichnet, dass**
die Andruckeinheit (4) wenigstens einen weiteren Andruckkörper (5) aufweist, der die Wandstruktur umschließt, sodass sich die Folie (3) beim Absenken der Deckfläche (51) unter die Stirnfläche (23) der Wandstruktur auch an die äußeren Wandflächen (25) der Wandstruktur anlegen kann, womit eine weitere Verbreiterung der Schweißnaht (28) erzielt werden kann.

2. Vorrichtung nach Anspruch 1, **dadurch gekennzeichnet, dass**
die Andruckeinheit (4) mindestens zwei Andruckkörper (5) aufweist, deren Deckflächen (51) in einer gleichen Ebene liegen und die Andruckkörper (5) miteinander Zwischenräume (54) einschließen, mit einer Zwischenraumbreite (ZB), die größer der Stirnflächenbreite (SB) zuzüglich der doppelten Foliendicke (FD) ist.

3. Vorrichtung nach Anspruch 2, **dadurch gekennzeichnet, dass**
die die Zwischenräume (54) einschließenden Andruckkörper (5), zur Homogenisierung der Laserstrahlung (61) durch Mehrfachreflexion, in den Zwischenräumen (54) sich gegenüberstehende Mantelflächen (53) aufweisen, die für die Laserstrahlung (61) reflektierend sind.

4. Vorrichtung nach einem der vorhergehenden Ansprüche, **dadurch gekennzeichnet, dass**
die Trägerplatte (12) mehrere Andruckeinheiten (4) zum gleichzeitigen Schweißen mehrerer Behälter (2) aufweist.

5. Verfahren zum Lasertransmissionsschweißen eines mit einer Folie (3) zu verschließenden offenen Behälters (2), der durch eine Stirnflächen (23) und innere und äußere Wandflächen (24 und 25) aufweisende Wandstruktur gebildet ist, wobei die Wandstruktur wenigstens einen Hohlraum (26) mit einer Querschnittsfläche umschließt, mit den Schritten:
a) Positionieren des Behälters (2) in einer Aufnahme (1),
b) Auflegen einer die Stirnflächen (23) und Querschnittsflächen abdeckenden Folie (3),
c) Positionieren einer Andruckeinheit (4), die wenigstens einen Andruckkörper (5) mit einer Deckfläche (51) aufweist, die wenigstens um eine doppelte Foliendicke (FD) kleiner als die wenigstens eine Querschnittsfläche ist, oberhalb der Folie (3), sodass die wenigstens eine Deckfläche (51) parallel zu den Stirnflächen (23) und oberhalb der wenigstens einen Querschnittsfläche angeordnet ist.
d) Beaufschlagen der Stirnflächen (23) mit einer Laserstrahlung (61) zur Bildung einer Schmelze (29) an den Stirnflächen (23), welche die aufliegende Folie durch Wärmeleitung im Bereich der Schmelze (29), in einen thermoplastischen Zustand überführt,
und durch den folgenden Schritt gekennzeichnet:
e) Absenken der Andruckeinheit (4) und damit der Deckfläche (51) des wenigstens einen Andruckkörpers (5) bis in eine unterhalb der Stirnflächen (23) der Wandstruktur reichende Eindrücktiefe (ET), sodass die Andruckeinheit (4) die im thermoplastischen Zustand befindliche Folie (3) über den Stirnflächen (23) straff zieht und die Folie (3) auch in einem an die Stirnflächen (23) angrenzenden Randbereich (33) der inneren und äußeren Wandflächen (24 und 25) anlegt, und daher auch an diesem Randbereich mit den inneren Wandflächen verschweißt wird, wodurch eine Schweißnahtbreite größer einer Stirnflächenbreite (SB) entsteht.

6. Verfahren nach Anspruch 5, **dadurch gekennzeichnet, dass**
die Eindrücktiefe (ET) der Andruckeinheit 4 soweit bis unterhalb der Stirnflächen (23) reicht, dass die Stirnflächen (23) durch den Andruck der Folie (3) verrunden.

7. Lasertransmissionsgeschweißter Behälter gebildet aus einer Stirnflächen (23) und innere und äußere Wandflächen (24 und 25) aufweisenden Wandstruktur, wobei die Wandstruktur wenigstens einen Hohlraum (26) mit einer Querschnittsfläche umschließt und mindestens eine in einer Wandrichtung steife Außenwand (21) aufweist und aus einer den wenigstens einen Hohlraum (26) verschließenden Folie (3), wobei die Folie mit den Stirnflächen (23) über eine Schweißnaht (28) verbunden ist, **dadurch gekennzeichnet, dass**
auch an die Stirnflächen (28) angrenzende Randbereiche (33) der inneren und äußeren Wandflächen (24 und 25) mit der Folie (3) über die Schweißnaht (28) verbunden sind, sodass die Schweißnaht (28) eine Schweißnahtbreite größer einer Stirnflächenbreite (SB) aufweist und der wenigstens eine Hohlraum (26) durch die unterhalb der Stirnflächen (23) liegende Folie (3) verschlossen ist.

8. Behälter nach Anspruch 7, **dadurch gekennzeichnet, dass**
durch die Wandstruktur ausschließlich Außenwände (21) gebildet sind und die Schweißnaht (28) an den Stirnflächen (23) und an den angrenzenden Randbereichen (33) innerer Wandflächen (24) ausgebildet ist.

9. Behälter nach Anspruch 7, **dadurch gekennzeichnet, dass**
durch die Wandstruktur, zusätzlich zu den Außenwänden (21), innenliegende, dünnwandige und den Behälter (2) in Kammern (27) unterteilende Trennwände (22) gebildet sind, deren Stirnflächen (23) in einer Ebene mit denen der Außenwände (21) liegen, wobei die Schweißnaht (28) an den Stirnflächen (23) und den angrenzenden Randbereichen (33) der beiden inneren Wandflächen (24) der Trennwände ausgebildet ist.

10. Behälter nach Anspruch 8 oder 9, **dadurch gekennzeichnet, dass**
die Schweißnaht (28) zusätzlich an dem an die Stirnfläche (23) angrenzenden Randbereich (33) äußerer Wandflächen (25) der wenigstens einen Außenwand (21) ausgebildet ist.

## Claims

1. A device for laser transmission welding of at least one self-contained weld seam (28) between an open container (2), which is formed by a wall structure comprising end faces (23) as well as inner and outer wall surfaces (24, 25) and enclosing at least one hollow space (26) with a cross-section surface, and a sheet (3) covering the end faces (23) and thereby closing the container (2), said device comprising: a laser beam source (6), which has a plurality of individually controllable laser beam emitters (62) arranged in a line array in an x-direction, a receptacle (1), which is configured to position the container (2) in the x-direction, the z-direction and a y-direction with respect to laser radiation (61) directed onto said receptacle (1) in a z-direction and coming from the laser beam source (6), said x-, y- and z-directions being perpendicular to each other; a movement device (7) for relative movement of the laser beam source (6) in the y-direction; a memory and control unit (8) for space-resolved control of the laser beam emitters (62), and at least one contact pressure unit (4), which is arranged downstream of the laser beam source (6) in the beam direction and is attached to a carrier plate (12) that is oriented perpendicular to the laser radiation (61) and is transparent for said laser radiation (61), said contact pressure unit (4) comprising at least one contact pressure body (5) with a cover surface (51) extending parallel to the end faces (23),
wherein said cover surface (51) of the at least one contact pressure body (5) is at least two sheet thicknesses (FD) smaller than the at least one cross-section surface, leaving at least one gap (32) between the contact pressure body (5) and the wall structure, said gap (32) corresponding to the sheet thickness (FD), and said at least one contact pressure body (5) being relatively movable with respect to the receptacle (1) in the z-direction so far that the cover surface (51) of the at least one contact pressure body (5) can be lowered into the container (2) below the end faces (23) of the wall structure, so that the sheet (3) placed on the end faces (23) can also contact the inner wall surfaces (24) in an edge region (33) adjoining the end faces (23) and is therefore also welded to the inner wall surfaces in this edge region, thus allowing the weld seam (28) to be welded with a weld seam width greater than an end face width (SB),
**characterised in that**
the contact pressure unit (4) comprises at least one further contact pressure body (5), which encloses the wall structure such that the sheet (3) can also contact the outer wall surfaces (25) of the wall structure when lowering the cover surface (51) below the end face (23) of the wall structure, thereby achieving further widening of the weld seam (28).

2. The device according to claim 1, **characterised in that**
the contact pressure unit (4) comprises at least two contact pressure bodies (5) whose cover surfaces (51) are located in the same plane, and the contact pressure bodies (5) enclose interstices (54) between them with an interstitial width (ZB) greater than the cover surface width (SB) plus twice the sheet thickness (FD).

3. The device according to claim 2, **characterised in that**
the contact pressure bodies (5) enclosing the interstices (54) comprise lateral surfaces (53) for homogenisation of the laser radiation (61) by multiple reflections, said lateral surfaces (53) being arranged opposite each other in the interstices (54) and being reflective for the laser radiation (61).

4. The device according to any one of the preceding claims, **characterised in that**
the carrier plate (12) comprises several contact pressure units (4) for simultaneous welding of several containers (2).

5. A method for laser transmission welding of an open container (2) to be closed with a sheet (3), said container (2) being formed by a wall structure comprising end faces (23) and inner and outer wall surfaces (24 and 25) as well as enclosing at least one hollow space (26) with a cross-section surface, said method comprising the steps wherein:
a) the container (2) is positioned in a receptacle (1),
b) a sheet (3) is applied which covers the end faces (23) and cross-section surfaces,
c) a contact pressure unit (4), which comprises at least one contact pressure body (5) with a cover surface (51) which smaller than the at least one cross-section surface by at least twice the sheet thickness (FD), is positioned above the sheet (3), so that the at least one cover surface (51) is arranged parallel to the end faces (23) and above the at least one cross-section surface,
d) laser radiation (61) is applied to the end faces (23) in order to form a melt (29) on the end faces (23), putting the sheet placed thereon in a thermoplastic state by heat conduction in the area of the melt (29),
and **characterised by** the following step:
e) lowering the contact pressure unit (4) and thereby the cover surface (51) of the at least one contact pressure body (5) to an indentation depth (ET) extending below the end faces (23) of the wall structure, so that the contact pressure unit (4) tightens the sheet (3), which is in the thermoplastic state, over the end faces (23) and also places the sheet (3) in contact with an edge region (33) of the inner and outer wall surfaces (24 and 25), said edge region (33) adjoining the end faces (23), so that the sheet (3), consequently, is also welded to the inner wall surfaces in this edge region, resulting in a weld seam width of greater than an end face width (SB).

6. The method according to claim 5, **characterised in that**
the indentation depth (ET) of the contact pressure unit (4) extends so far below the end faces (23) as to round off the end faces (23) by the contact pressure of the sheet (3).

7. A laser transmission-welded container, which is formed by a wall structure comprising inner and outer wall surfaces (24 and 25), wherein the wall structure encloses at least one hollow space (26) with a cross-section surface and comprises at least one outer wall (21) which is rigid in one wall direction, and by a sheet (3) closing the at least one hollow space (26), said sheet being connected with the end faces (23) via a weld seam (28), **characterised in that**
edge regions (33) of the inner and outer wall surfaces (24 and 25), adjoining the end faces (28), are also connected to the sheet (3) via the weld seam (28), so that the weld seam (28) has a weld seam width greater than an end face width (SB) and said at least one hollow space (26) is closed by the sheet (3) located below the end faces (23).

8. The container according to claim 7, **characterised in that**
the wall structure exclusively forms outer walls (21) and the weld seam (28) is formed on the end faces (23) and on the adjacent edge regions (33) of inner wall surfaces (24).

9. The container according to claim 7, **characterised in that**
the wall structure forms, in addition to the outer walls (21), internally located, thin partition walls (22), which divide the container (2) into chambers (27) and whose end faces (23) are located in the same plane as those of the outer walls (21), with the weld seam (28) being formed on the end faces (23) and on the adjacent edge regions (33) of both inner wall surfaces (24) of the partition walls.

10. The container according to claim 8 or 9, **characterised in that**
the weld seam (28) is additionally formed in the edge region (33) of outer wall surfaces (25) of the at least one outer wall (21), said edge region (33) adjoining the end face (23).

## Revendications

1. Dispositif de soudage par transmission laser d'au moins une soudure (28), fermée en soi, entre un réservoir ouvert (2), qui est constitué par une structure à parois présentant des faces d'extrémité (23) ainsi que des faces de paroi intérieures et extérieures (24, 25), ladite structure à parois enfermant au moins un creux (26) avec une face de section transversale, et une feuille (3) couvrant lesdits faces d'extrémité (23) et fermant de cette manière le réservoir (2), ledit dispositif comportant: une source de rayonnement laser (6) qui présente une pluralité d'émetteurs laser (62) à commande individuelle et disposés en ligne dans une direction x; un logement (1) destiné à positionner le réservoir (2) en direction de x, de z et de y par rapport à un rayonnement laser (61) dirigé sur ledit logement (1) dans une direction z et émis par la source de rayonnement laser (6), lesdites directions de x, de y et de z étant perpendiculaires l'une à l'autre; un moyen de déplacement (7) pour le déplacement relatif de la source de rayonnement laser (6) en direction de y; une unité de mémorisation et de commande (8) pour la commande à résolution spatiale des émetteurs laser (62); et au moins une unité de pression (4), qui est disposée en aval de la source de rayonnement laser (6) en direction de rayonnement et est montée à une plaque de support (12) à orientation perpendiculaire par rapport au rayonnement laser (61) et transparente pour le rayonnement laser (61), ladite unité de pression (4) comportant au moins un corps de pression (5) avec une face supérieure (51) qui est disposée parallèlement aux faces d'extrémité (23),
la taille de la face supérieure (51) dudit au moins un corps de pression (5) étant au moins deux fois l'épaisseur de feuille (FD) plus petite que ladite au moins une face de section transversale, de manière à laisser au moins un espace libre (32) entre le corps de pression (5) et la structure à parois, ledit espace libre (32) étant égal à l'épaisseur de feuille (FD), et ledit au moins un corps de pression (5) étant mobile en direction de z, par rapport au logement (1) jusqu'à permettre l'abaissement de la face supérieure (51) dudit au moins un corps de pression (5) sous les faces d'extrémité (23) de la structure à parois pour entrer dans le réservoir (2) de sorte que la feuille (3) placée sur les faces d'extrémité (23) puisse s'appliquer également sur les faces de paroi intérieures (24) dans une région périphérique (33) adjacente aux faces d'extrémité (23) et qu'elle soit, par conséquent, soudée également aux faces de paroi intérieures dans cette région périphérique, permettant de réaliser ladite soudure (28) à une largeur supérieure à une largeur de face d'extrémité (SB),
**caractérisé en ce que**
l'unité de pression (4) comporte au moins un autre corps de pression (5) enfermant la structure à parois de sorte que la feuille (3) puisse s'appliquer également sur les faces de parois extérieures (25) de la structure à parois, lors de l'abaissement de la face supérieure (51) sous la face d'extrémité (23) de la structure à parois, permettant d'obtenir ainsi un élargissement additionnel de la soudure (28).

2. Dispositif selon la revendication 1, **caractérisé en ce que**
l'unité de pression (4) comporte au moins deux corps de pression (5), dont les faces supérieures (51) sont disposées dans une même plan, et **en ce que** les corps de pression (5) enferment entre eux des interstices (54) présentant une largeur interstitielle (ZB) qui est supérieure à la somme de la largeur de face d'extrémité (SB) et deux fois l'épaisseur de feuille (FD).

3. Dispositif selon la revendication 2, **caractérisé en ce que**
les corps de pression (5) qui enferment les interstices (54) comportent, pour l'homogénéisation du rayonnement laser (61) par des réflexions multiples, des surfaces d'enveloppe (53), opposées dans les interstices (54), qui réfléchissent le rayonnement laser (61).

4. Dispositif selon l'une quelconque des revendications précédentes, **caractérisé en ce que** la plaque de support (12) comporte plusieurs unités de pression (4) pour souder plusieurs réservoirs (2) en même temps.

5. Procédé de soudage par transmission laser d'un réservoir ouvert (2) à fermer par une feuille (3), ledit réservoir (2) étant constitué par une structure à parois qui comporte des faces d'extrémité (23) et des faces de paroi intérieures et extérieures (24 et 25) et enferme au moins un creux (26) avec une face de section transversale, ledit procédé comportant les étapes:
a) de positionner le réservoir (2) dans un logement (1),
b) d'appliquer une feuille (3) couvrant les faces d'extrémité (23) et les faces de section transversale,
c) de positionner une unité de pression (4), qui comporte au moins un corps de pression (5) avec une face supérieure (51) qui est deux fois l'épaisseur de feuille (FD) plus petite que ladite au moins une face de section transversale, au-dessus de la feuille (3), de sorte que ladite au moins une face supérieure (51) soit disposée parallèlement aux faces d'extrémité (23) et au-dessus de ladite au moins une face de section transversale,
d) d'appliquer un rayonnement laser (61) sur les faces d'extrémité (23) pour former une masse fondue (29) sur les faces d'extrémité (23), mettant ainsi la feuille appliquée dans un état thermoplastique par conduction thermique dans la région de la masse fondue (29),
et étant **caractérisé par** l'étape suivante:
e) abaissement de l'unité de pression (4) et, par conséquent, de la face supérieure (51) dudit au moins un corps de pression (5) à une profondeur d'indentation (ET) qui s'étend au-dessous des faces d'extrémité (23) de la structure à parois, de sorte que l'unité de pression (4) serre la feuille (3), en état thermoplastique, sur les faces d'extrémité (23) et applique la feuille (3) également dans une région périphérique (33) des faces de paroi intérieures et extérieures (24 et 25) qui avoisine les faces d'extrémité (23), la feuille (3) étant également soudée, par conséquent, aux faces de paroi intérieures dans cette région périphérique, réalisant ainsi une largeur de soudeur supérieure à une largeur de face d'extrémité (SB).

6. Procédé selon la revendication 5, **caractérisé en ce que**
la profondeur d'indentation (ET) de l'unité de pression (4) s'étend juste en-dessous des faces d'extrémité (23) jusqu'à arrondir les faces d'extrémité (23) par la pression de la feuille (3).

7. Réservoir réalisé par soudage par transmission laser et constitué par une structure à parois qui comporte des faces d'extrémité (23) et des faces de paroi intérieures et extérieures (24 et 25), ladite structure à parois enfermant au moins un creux (26) avec une face de section transversale et comportant au moins une paroi extérieure (21) qui est rigide dans une direction de paroi, et par une feuille (3) fermant ledit au moins un creux (26), cette feuille étant reliée aux faces d'extrémité (23) par une soudure (28), **caractérisé en ce que** des régions périphériques (33), adjacentes aux faces d'extrémité (23), des faces de paroi intérieures et extérieures (24 et 25) sont également reliées avec la feuille (3) par la soudure (28), de sorte que la soudure (28) présente une largeur supérieure à une largeur de face d'extrémité (SB) et que ledit au moins un creux (26) soit fermé par la feuille (3) disposée au-dessous des faces d'extrémité (23).

8. Réservoir selon la revendication 7, **caractérisé en ce que**
la structure à parois constitue exlusivement des parois extérieures (21) et **en ce que** la soudure (28) est réalisée sur les faces d'extrémité (23) et sur les régions périphériques (33) adjacentes de faces de paroi intérieures (24).

9. Réservoir selon la revendication 7, **caractérisé en ce que**
la structure à parois constitue, en plus desdites parois extérieures (21), des cloisons (22) intérieures minces qui séparent le réservoir (2) en des chambres (27), les faces d'extrémité (23) desdites cloisons (22) étant disposées dans le même plan que celles des parois extérieures (21), la soudure (28) étant réalisée sur les faces d'extrémité (23) et sur les régions périphériques (33) adjacentes des deux faces de paroi intérieures (24) des cloisons.

10. Réservoir selon la revendication 8 ou 9, **caractérisé en ce que**
la soudure (28) est réalisée en plus dans la région périphérique (33), adjacente à la face d'extrémité (23), de faces de paroi extérieures (25) de ladite au moins une paroi extérieure (21).
